Europäisches Patentamt

European Patent Office

Office européen des brevets

(19)

(11) **EP 0 938 048 B1**

(12) **FASCICULE DE BREVET EUROPEEN**

(45) Date de publication et mention
de la délivrance du brevet:
**18.08.2004 Bulletin 2004/34**

(51) Int Cl.⁷: **G06F 13/42**

(21) Numéro de dépôt: **99400345.7**

(22) Date de dépôt: **12.02.1999**

(54) **Procédé de transfert de données en série, et interface de bus série synchrone mettant en oeuvre un tel procédé**

Verfahren zur seriellen Datenübertragung und synchrone und serielle Busschnittstelle zur Durchführung dieses Verfahrens

Method for transferring serial data and synchronous serial bus interface using such method

(84) Etats contractants désignés:
**DE ES FI GB IT SE**

(30) Priorité: **16.02.1998 FR 9801831**

(43) Date de publication de la demande:
**25.08.1999 Bulletin 1999/34**

(73) Titulaire: **NORTEL NETWORKS France
78117 Châteaufort (FR)**

(72) Inventeur: **Nihouarn, Gilbert
29180 Guengat (FR)**

(74) Mandataire: **Loisel, Bertrand
Cabinet Plasseraud
65/67 rue de la Victoire
75440 Paris Cedex 09 (FR)**

(56) Documents cités:
**EP-A- 0 159 941       EP-A- 0 498 494
US-A- 5 434 862**

**Description**

La présente invention concerne le domaine des transmissions de données numériques en série. Elle concerne plus particulièrement un bus synchrone et son protocole de transmission en mode maître/esclave entre une unité principale (maître) et une unité périphérique (esclave), tel que décrit dans le document US-A-5 434 862.

Un exemple d'un tel bus, utilisé dans diverses catégories d'appareil, est le bus dit I$^2$C décrit dans le brevet européen 0 051 332. Un certain nombre de cycles d'horloge sont nécessaires au microprocesseur ou microcontrôleur constituant l'unité principale pour récupérer un octet de données (58 cycles d'horloge dans le cas du circuit commercialisé par la société PHILIPS sous la référence PCD 3316 employant un tel bus).

Un but de la présente invention est de proposer un nouveau protocole de bus série synchrone permettant d'accéder plus rapidement à certaines données dans l'unité périphérique.

L'invention propose ainsi un procédé de transfert de données en série entre une unité principale et une unité périphérique reliées entre elles par un bus comprenant une ligne de données et une ligne d'horloge,

dans lequel l'unité principale commande des cycles de transfert synchronisés au moyen de la ligne d'horloge, comprenant des cycles de transfert avec adressage et des cycles de transfert direct,

dans lequel, au cours de chaque cycle, l'unité principale transmet sur la ligne de données une impulsion d'activation alors que la ligne d'horloge est à un premier niveau logique,

dans lequel, avant de transmettre l'impulsion d'activation dans un cycle de transfert avec adressage, l'unité principale transmet sur la ligne de données des bits d'une adresse de transfert, avec des impulsions de synchronisation correspondantes sur la ligne d'horloge,

dans lequel, après avoir reçu l'impulsion d'activation dans un cycle de transfert avec adressage, l'unité périphérique accède à un emplacement de mémoire déterminé à partir de l'adresse de transfert pour écrire ou lire des bits de données présentés successivement sur la ligne de données en synchronisme avec des impulsions de synchronisation correspondantes sur la ligne d'horloge,

et dans lequel, après avoir reçu l'impulsion d'activation dans un cycle de transfert direct, l'unité périphérique accède à un emplacement déterminé préalablement audit cycle de transfert direct pour écrire ou lire des bits de données présentés successivement sur la ligne de données en synchronisme avec des impulsions de synchronisation reçues sur la ligne d'horloge.

Le protocole de transfert est très simple, de sorte qu'il permet des accès rapides. Il repose sur la détection de l'impulsion d'activation, ou "strobe", sur la ligne de données par l'unité périphérique. L'unité principale distingue les différents modes de transfert par la position de cette impulsion d'activation au cours du cycle et/ou au moyen de bits de sélection présentés sur la ligne de données avant l'impulsion d'activation et/ou par un décodage des bits d'adresse.

Un accès très rapide à certains emplacements de mémoire de l'unité périphérique est rendu possible par le mode de transfert direct, étant donné que l'unité principale ne présente pas de bits d'adresse dans ce mode, et que l'information désirée est sélectionnée au préalable.

L'emplacement où les bits de données transmis sont obtenus en mode de transfert direct peut être un emplacement fixe prédéterminé, ce qui permet de simplifier au maximum la structure de l'interface de bus de l'unité périphérique et donc de minimiser son coût.

Ce peut également être un emplacement dont l'adresse est obtenue à partir d'une information fournie par l'unité principale lors d'un cycle d'écriture antérieur. Dans ce cas, des cycles de lecture directe peuvent être exécutés par l'unité principale pour lire différents types d'information dans l'unité périphérique. Le nombre de bits ainsi lu peut également être un paramètre réglé par l'unité principale lors d'un cycle d'écriture antérieur.

Le mode de lecture directe peut notamment être utilisé dans le traitement rapide de certaines interruptions par l'unité principale.

Un autre avantage du bus proposé est qu'il peut partager sa ligne de données et sa ligne d'horloge avec celles d'un bus fonctionnant selon un autre protocole pour l'échange de données entre l'unité principale et d'autres entités.

Selon un second aspect, la présente invention propose une interface de bus série synchrone pour une unité périphérique commandée par une unité principale par l'intermédiaire d'un bus incluant une ligne de données et une ligne d'horloge, comprenant :

- des moyens de détection d'impulsions d'activation, pour détecter des impulsions d'activation survenant sur la ligne de données du bus alors que la ligne d'horloge du bus est à un premier niveau logique;
- un premier registre à décalage cadencé par la ligne d'horloge du bus, ayant une entrée de données en série reliée à la ligne de données ;
- un second registre à décalage ayant une entrée de données en série reliée à la sortie de données en série du premier registre à décalage ou à la ligne de données, et cadencé par la sortie d'une porte OU EXCLUSIF dont une entrée est reliée à la ligne d'horloge du bus et l'autre entrée reçoit un signal binaire de sélection;
- un commutateur de sortie relié d'une part à la sortie de données en série du second registre à décalage et d'autre part à la ligne de données du bus ;

- des moyens d'identification de cycle de transfert, pour analyser le contenu du premier registre à décalage lorsqu'une impulsion d'activation est détectée de manière à identifier chaque cycle de transfert dont fait partie une impulsion d'activation détectée ;
- des registres d'écriture adressables à partir d'une adresse d'écriture obtenue à partir du premier registre à décalage lorsqu'un cycle d'écriture avec adressage a été identifié, cycle d'écriture avec adressage dans lequel le signal binaire de sélection est maintenu à 0, le commutateur de sortie est maintenu ouvert et la détection de l'impulsion d'activation est suivie par le transfert en parallèle du contenu du second registre à décalage dans le registre d'écriture désigné par l'adresse d'écriture ;
- des registres de lecture adressables à partir d'une adresse de lecture lorsqu'un cycle de lecture a été identifié, cycle de lecture dans lequel la détection de l'impulsion d'activation est suivie par le transfert en parallèle d'une partie au moins du contenu du registre de lecture désigné par l'adresse de lecture dans le second registre à décalage et par le transfert en série du contenu du second registre à décalage vers le commutateur de sortie, transfert en série pendant lequel le signal binaire de sélection est mis à 1 et le commutateur de sortie est fermé; et
- des moyens de gestion des cycles de transfert pour obtenir l'adresse de lecture à partir du premier registre à décalage lorsqu'un cycle de lecture avec adressage a été identifié, et pour fournir une adresse de lecture préalablement déterminée lorsqu'un cycle de lecture directe a été identifié.

D'autres particularités et avantages de la présente invention apparaîtront dans la description ci-après d'exemples de réalisation non limitatifs, en référence aux dessins annexés, dans lesquels:

- la figure 1 est un schéma synoptique d'un appareil mettant en oeuvre la présente invention ;
- les figures 2 à 4 sont des chronogrammes illustrant respectivement un cycle d'écriture, un cycle de lecture avec adressage et un cycle de lecture directe exécutés dans un exemple de procédé selon l'invention ;
- la figure 5 est un schéma d'un exemple de module d'entrée/sortie d'une interface mettant en oeuvre ce procédé ;
- la figure 6 est un schéma détaillant un exemple de réalisation d'un détecteur d'impulsions d'activation du module de la figure 5 ;
- la figure 7 est un schéma d'un autre exemple de module d'entrée/sortie d'une interface selon l'invention ; et
- les figures 8 à 11 sont des chronogrammes illustrant respectivement un cycle d'écriture avec adressage, un cycle de lecture avec adressage, un cycle d'écriture directe et un cycle de lecture directe exécutés dans le module d'entrée/sortie selon la figure 7.

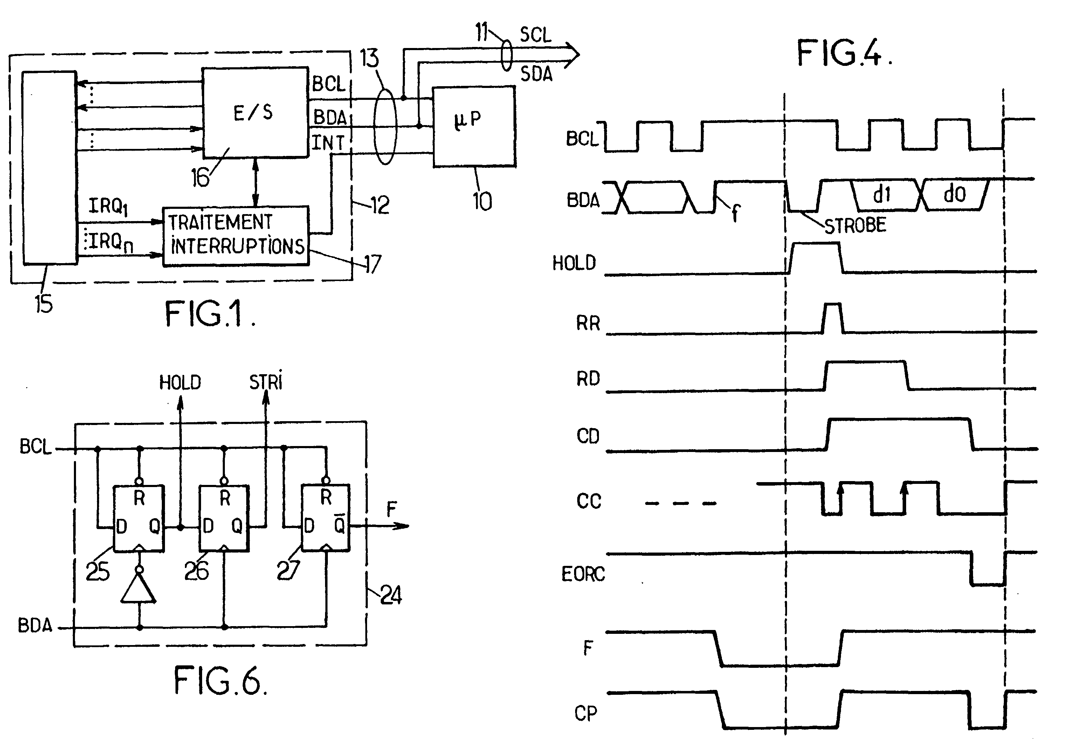

La figure 1 montre schématiquement un appareil dont le fonctionnement général est commandé par une unité principale constituée par un microprocesseur 10. Le microprocesseur 10 supervise un certain nombre d'unités (non représentées) de l'appareil par l'intermédiaire d'un bus série 11 de type connu, tel que par exemple un bus $I^2C$ comportant une ligne de données SDA et une ligne d'horloge SCL (voir EP-B-0 051 332).

Une autre unité périphérique 12 est supervisée par le microprocesseur 10 à l'aide d'un bus série 13 fonctionnant conformément à l'invention.

A titre d'exemple d'application, l'appareil peut être un poste téléphonique dont le microprocesseur 10 supervise à l'aide du bus $I^2C$ 11 des unités telles qu'un clavier, un écran d'affichage et diverses interfaces, l'unité 12 étant un composant dédié à l'observation de la ligne téléphonique et au traitement de certaines données relatives à des services évolués proposés par les opérateurs de réseaux.

Dans ce genre d'application, le coût des composants doit être le plus bas possible, et il est notamment souhaitable de pouvoir limiter autant que possible le nombre de broches d'entrée/sortie du microprocesseur. Dans ce but, le bus 13 servant aux échanges entre les unités 10 et 12 emprunte les lignes de données et d'horloge du bus général 11, qui sont également notées BDA et BCL. Le protocole qui sera décrit ci-après évite les ambiguïtés sur ces lignes.

Le bus 13 comporte en outre une ligne d'interruption INT permettant à l'unité périphérique 12 de signaler certains événements au microprocesseur 10 par l'envoi d'une requête d'interruption.

L'interface de bus, prévue entre les circuits opérationnels 15 de l'unité périphérique 12 et le bus 13, comprend un module d'entrée/sortie 16 et un module 17 de traitement des interruptions. Le module 17 reçoit des circuits 15 des signaux d'interruption respectifs $IRQ_1$-$IRQ_n$ relatifs à un ensemble de $n$ événements dont la détection déclenche l'envoi sur la ligne INT d'une requête d'interruption. Le module 17 gère le stockage, dans un registre d'état du module 16, de $n$ bits correspondant aux états des signaux $IRQ_1$-$IRQ_n$. En réponse à une requête d'interruption reçue sur la ligne INT, le microprocesseur 10 lit le registre d'état afin de connaître l'origine de l'interruption et de déterminer le programme d'interruption devant être exécuté.

Dans l'exemple d'application à un poste téléphonique, l'ensemble d'événements associés aux signaux d'interruption $IRQ_1$-$IRQ_n$ comprend par exemple la détection d'une sonnerie sur la ligne, le détection de la présence de la tension de ligne et la détection de divers signaux que le réseau transmet sur la ligne téléphonique dans le cadre de services particuliers.

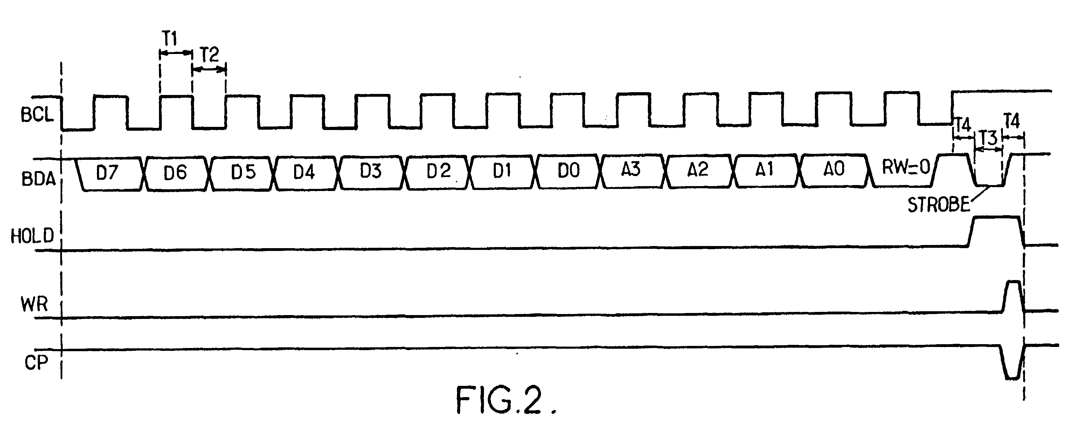

Les deux premières lignes des figures 2 à 4 montrent comment le microprocesseur 10 contrôle les lignes BCL, BDA du bus 13 pour déclencher des transferts de données depuis ou vers l'unité périphérique 12. Dans chaque cas, l'utilisation du bus 13 est signalée par une impulsion d'activation (strobe) présentée pendant un cycle de transfert sur la ligne de données BDA alors que la ligne d'horloge BCL est à un niveau logique donné. Dans l'exemple décrit, ce niveau logique est le niveau 1, et l'impulsion d'activation est une impulsion de niveau logique 0, c'est-à-dire commençant par un front descendant et se terminant par un front montant, ces deux fronts survenant pendant que BCL=1.

Dans un cycle d'écriture avec adressage (figure 2), l'impulsion d'activation est précédée par n+m+1 impulsions de synchronisation régulières sur la ligne d'horloge BCL (n=8 et m=4 dans l'exemple représenté), chaque impulsion commençant par un front montant et se terminant par un front descendant. Les changements de niveau logique sur la ligne de données BDA ne sont pas autorisés pendant ces n+m+1 impulsions de synchronisation (BCL=1), mais uniquement entre ces impulsions (BCL=0). Les n=8 premiers bits transmis au cours du cycle d'écriture sont des bits de données formant un octet à écrire, transmis par le microprocesseur 10 dans l'ordre des poids décroissants D7-D0. Les m=4 bits suivants A3-A0 forment une adresse d'écriture pour le stockage de l'octet précédent. Le dernier bit RW, qui précède immédiatement l'impulsion d'activation, indique par la valeur RW=0 que le cycle en cours est un cycle d'écriture.

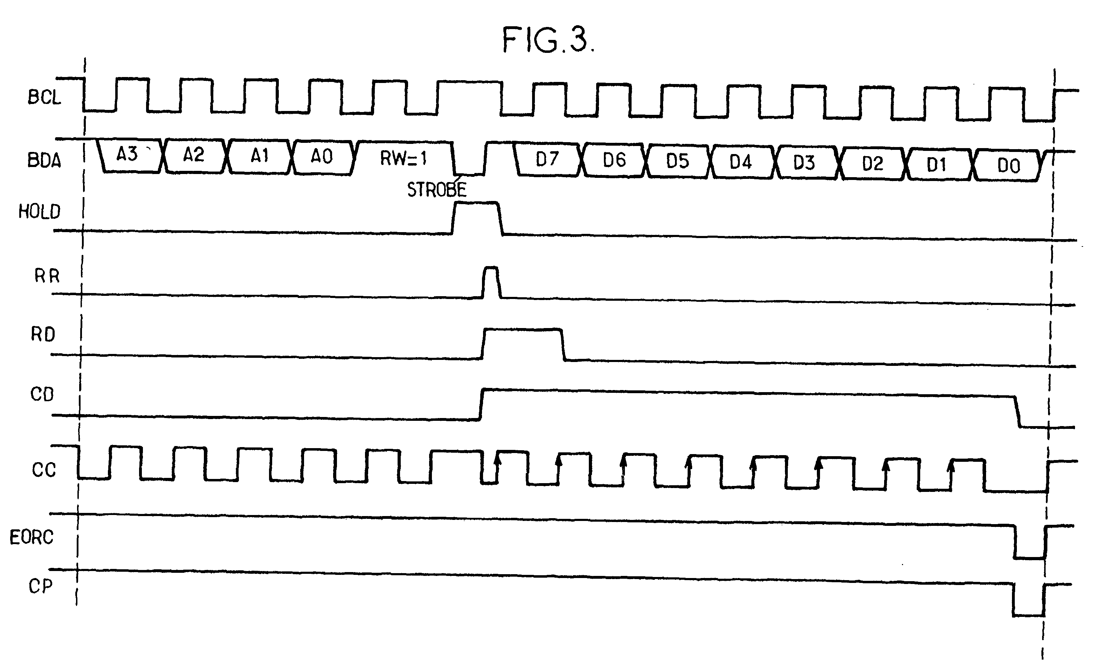

Dans un cycle de lecture avec adressage (figure 3), l'impulsion d'activation est précédée par m+1 impulsions de synchronisation sur la ligne d'horloge BCL, m+1 bits étant transmis comme précédemment par le microprocesseur sur la ligne de données BDA. Les m=4 premiers de ces bits forment une adresse de lecture A3-A0 pour les données requises par le microprocesseur. Le dernier bit RW, qui précède immédiatement l'impulsion d'activation, indique par la valeur RW=1 que le cycle en cours est un cycle de lecture avec adressage.

Après l'impulsion d'activation dans un cycle de lecture avec adressage, le microprocesseur 10 transmet encore n=8 impulsions de synchronisation sur la ligne BCL, auxquelles le module 16 de l'unité périphérique 12 répond en présentant successivement sur la ligne BDA les n=8 bits de l'octet lu, dans l'ordre des poids décroissants D7-D0. Comme précédemment, la transmission de ces n bits de données est opérée de façon telle que les transitions entre ces bits aient lieu quand la ligne d'horloge est dans l'état BCL=0.

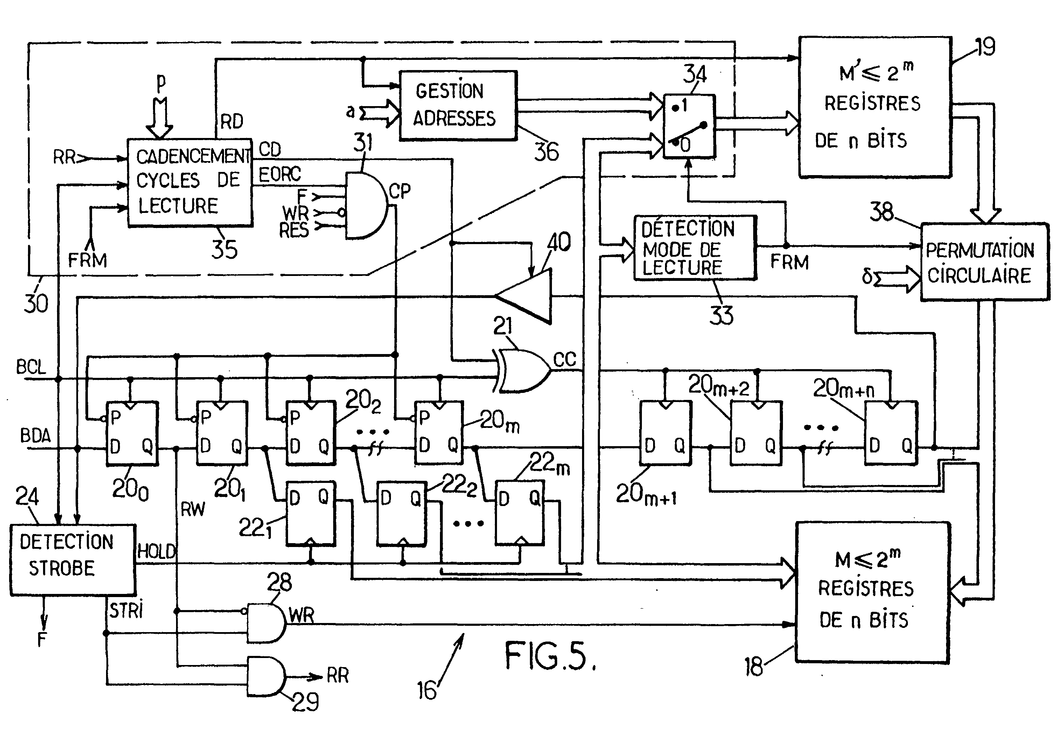

Dans un cycle de lecture directe (figure 4), l'impulsion d'activation est transmise par le microprocesseur au début du cycle. Après cette impulsion d'activation, le processeur 10 présente *p* impulsions de synchronisation sur la ligne d'horloge BCL, auxquelles l'unité périphérique 12 répond en transmettant *p* bits de données d1-d0 sur la ligne BDA de la même manière que précédemment (les transitions entre bits ont lieu pendant que BCL=0).

Dans l'exemple de la figure 4, on a représenté le cas particulier où p=2. Les p=2 bits d1-d0 sont par exemple lus à une adresse fixe prédéterminée dans les registres du module d'entrée/sortie 16.

Dans l'exemple d'application au poste téléphonique, les p=2 bits lus dans un cycle de lecture directe peuvent être les deux bits du registre d'état indiquant respectivement la détection d'une sonnerie sur la ligne téléphonique et la présence de la tension de ligne. Ces deux bits représentent des informations dont le microprocesseur 10 peut avoir besoin de façon très urgente pour adopter une réponse appropriée. Ainsi, lorsqu'il reçoit une requête d'interruption sur la ligne INT, le microprocesseur 10 peut déclencher un cycle de lecture directe dont l'exécution est très rapide, afin de connaître les valeurs de ces deux bits et d'adopter la réponse appropriée dans les meilleurs délais s'ils montrent effectivement l'origine de l'interruption. Dans le cas contraire, le microprocesseur 10 peut ensuite déclencher un cycle de lecture avec adressage dans le registre d'état afin de connaître les autres bits d'état et d'identifier l'origine de l'interruption.

A titre d'exemple numérique (voir figure 2), la fréquence d'horloge étant de 500 kHz, la durée des impulsions sur la ligne d'horloge (BCL=1) peut être T1=1 μs, et ces impulsions peuvent être séparées par une durée T2=1 μs (BCL=0); l'impulsion d'activation (strobe) de niveau logique 0 peut avoir une durée T3=1 μs, précédée et suivie par un temps de garde T4=0,5 μs pendant lequel BCL=BDA=1. La durée d'un cycle d'écriture ou de lecture avec adressage est alors d'environ 15 μs, et la durée d'un cycle de lecture directe avec p=2 est d'environ 4 μs. Les accès peuvent être encore plus rapides lorsque le bus n'est pas soumis aux contraintes du protocole I$^2$C, la fréquence d'horloge pouvant dans ce cas être plus élevée.

Lorsqu'il n'est pas en train d'exécuter un cycle de transfert sur le bus 11/13, le microprocesseur 10 maintient la ligne d'horloge SDA/BDA au niveau logique 1.

Dans le protocole du bus I$^2$C 11, un front descendant sur la ligne de données SDA alors que la ligne d'horloge SCL est au niveau logique 1 caractérise un début de cycle de transfert, tandis qu'un front montant *f* sur la ligne de données SDA pendant que BCL=1 caractérise la fin d'un cycle de transfert (figure 4). En conséquence, selon ce protocole I$^2$C, la ligne de données ne change pas de niveau logique plus d'une fois pendant que la ligne d'horloge est au niveau 1. On voit donc que le protocole de transfert proposé selon l'invention, illustré par les figures 2 à 4, ne donne lieu à aucune ambiguïté avec le protocole du bus I$^2$C utilisé par le microprocesseur 10 pour superviser d'autres unités de l'appareil:

-    le contrôle des lignes SDA/BDA, SCL/BCL appartient au microprocesseur 10 qui assure la coexistence des deux bus ;

- lorsque le microprocesseur commande le bus 13 comme représenté sur l'une des figures 2 à 4, aucun cycle de transfert I$^2$C n'est exécuté sur le bus 11 puisque l'impulsion d'activation conduit à commencer puis terminer un cycle I$^2$C dans lequel rien ne se serait déroulé, et la stabilité de la ligne de données BDA pendant que BCL=1 en dehors de l'impulsion d'activation ne peut générer aucun début de cycle I$^2$C;

- lors de l'exécution d'un cycle de transfert selon le protocole I$^2$C, l'impulsion d'activation n'est pas reçue par l'unité périphérique 12 de sorte que des transferts intempestifs sur le bus 13 sont évités.

La structure du module d'entrée/sortie 16 de l'unité périphérique 12 est par exemple conforme au schéma de la figure 5. Sur cette figure, la référence 18 désigne un groupement de $M \leq 2^m$ registres de $n$ bits dans lesquels le microprocesseur 10 peut commander des écritures dans des cycles tels que celui représenté sur la figure 2, le registre du groupement 18 où une telle écriture a lieu étant choisi à l'aide de l'adresse d'écriture A3-A0. La référence 19 désigne un groupement de $M' \leq 2^m$ registres de $n$ bits dans lesquels le microprocesseur 10 peut commander des lectures de données dans des cycles de lecture avec adressage tels que celui représenté sur la figure 3, le registre du groupement 19 où une telle lecture a lieu étant choisi à l'aide de l'adresse de lecture A3-A0. Ces registres de lecture 19 comprennent le registre d'état utilisé pour la gestion des interruptions.

Le module 16 comprend un registre à décalage constitué de m+1 bascules D en cascade $20_0$-$20_m$ cadencées par les fronts montants du signal présent sur la ligne d'horloge BCL. L'entrée de données de ce registre à décalage, c'est-à-dire l'entrée D de la première bascule $20_0$, est reliée à la ligne de données BDA. Le module 16 comprend un second registre à décalage constitué de $n$ bascules D en cascade $20_{m+1}$-$20_{m+n}$ cadencées par les fronts montants d'un signal CC délivré par une porte OU EXCLUSIF 21. Pour $1 \leq i \leq m+n$, l'entrée D de la bascule $20_i$ est reliée à la sortie Q de la bascule $20_{i-1}$. La porte 21 a une entrée reliée à la ligne d'horloge BCL. Son autre entrée reçoit un signal binaire de sélection CD.

Au moment où une impulsion d'activation est reçue par l'unité périphérique 12 dans un cycle d'écriture ou de lecture avec adressage, le bit de sélection de mode RW est présent à la sortie Q de la bascule $20_0$, et les $m$ bits d'adresse A3-A0, sont présents aux sorties Q des bascules $20_1$-$20_m$

Un registre auxiliaire de $m$ bits est constitué de $m$ bascules D $22_1$-$22_m$. Pour $1 \leq i \leq m$, l'entrée D de la bascule $22_i$ est reliée à la sortie Q de la bascule $20_i$. Les sorties Q des bascules $22_1$-$22_m$ fournissent les $m$ bits d'adresse délivrés au groupement de registres d'écriture 18 et au groupement de registres de lecture 19. Pour que ce registre auxiliaire $22_1$-$22_m$ reçoive l'adresse A3-A0 au moment de la détection de l'impulsion d'activation dans un cycle d'écriture ou de lecture avec adressage, les bascules D $22_1$-$22_m$ sont cadencées par les fronts montants d'un signal HOLD délivré par un détecteur d'impulsions d'activation 24.

Ce détecteur 24 (figure 6) comprend deux bascules D 25,26 dont les sorties Q sont remises au niveau logique 0 à chaque front descendant survenant sur la ligne d'horloge BCL. La ligne BCL est reliée à l'entrée D de la bascule 25 qui est cadencée par les fronts descendants survenant sur la ligne de données BDA, et dont la sortie Q délivre le signal HOLD précité. Ce signal est d'autre part adressé à l'entrée D de la bascule 26 cadencée par les fronts montants survenant sur la ligne de données BDA, et dont la sortie Q délivre un signal de détection STRI. Ce signal STRI présente une impulsion de niveau logique 1 qui commence à la fin de chaque impulsion d'activation et se termine lorsque la ligne BCL revient à 0.

Une porte ET 28 combine le signal STRI avec le complément logique du bit RW obtenu sur la sortie Q de la bascule $20_0$ pour produire le signal de commande d'écriture WR adressé au groupement de registres d'écriture 18. Ce signal WR (figure 2) commande le transfert en parallèle des $n$ bits D7-D0 présents sur les sorties Q des bascules $20_{m+1}$-$20_{m+n}$ dans le registre du groupement 18 dont l'emplacement est désigné par les m bits d'adresse A3-A0 obtenus sur les sorties Q des bascules $22_1$-$22_m$.

Une autre porte ET 29 reçoit le signal STRI et le bit de sélection RW obtenu sur la sortie Q de la bascule $20_0$ pour produire un signal RR ayant la même allure dans les cycles de lecture (figures 3 et 4).

Pour faire la distinction entre les cycles de lecture avec adressage et les cycles de lecture directe, on prévoit qu'une valeur de l'adresse de lecture soit exclue par le microprocesseur 10 pour les cycles de lecture avec adressage. A titre d'exemple, ce peut être la valeur pour laquelle tous les bits d'adresse sont à 1.

Les bascules du premier registre à décalage $20_0$-$20_m$ ont chacune une entrée de présélection P servant à forcer leur sortie Q au niveau logique 1 lors de chaque front descendant d'un signal de présélection CP. Ce signal CP est fourni par un filtre formé par une porte ET 31 appartenant à des moyens 30 de gestion des cycles de lecture. La porte ET 31 combine les signaux suivants :

- un signal RES de réinitialisation générale de l'unité 12;
- le complément logique du signal de commande d'écriture WR, dont le front montant survenant à la fin d'un cycle d'écriture (figure 2) provoque ainsi l'écriture de l'adresse exclue dans les bascules $20_1$-$20_m$ du premier registre à décalage, et de RW=1 dans la bascule $20_0$;
- un signal de fin de cycle de lecture EORC, qui présente une impulsion de niveau logique 0 à la fin de chaque cycle de lecture (figures 3 et 4), pour écrire RW=1 ainsi que l'adresse exclue dans le registre $20_0$-$20_m$ à la fin de chaque cycle de lecture, directe ou avec adressage ; et

- un signal F de détection de fausses impulsions d'activation, qui repère des changements de niveau logique sur la ligne de données BDA survenant alors que BCL=1 et qui ne sont pas attribuables à une impulsion d'activation.

Le signal F sert à forcer l'écriture de RW=1 et de la valeur d'adresse exclue dans le registre $20_0$-$20_m$ à la fin des cycles de transfert commandés par le microprocesseur 10 selon le protocole I$^2$C. Ce signal F présente un front descendant à la fin de chaque cycle de transfert I$^2$C, comme le montre la partie gauche de la figure 4. Ce signal F est par exemple fourni par la sortie inverseuse $\overline{Q}$ d'une bascule D 27 du détecteur d'impulsions d'activation 24 (figure 6). Cette bascule 27 est remise au niveau 0 à chaque front descendant survenant sur la ligne d'horloge BCL. La ligne BCL est reliée à l'entrée D de la bascule 27 qui est cadencée par les fronts montants survenant sur la ligne de données BDA.

La mise en forme du signal de présélection CP est telle que le microprocesseur 10 peut décider à chaque instant d'exécuter un cycle de lecture directe.

Pour identifier la nature du cycle de transfert en cours, les portes ET 28,29 sont complétées par une logique de détection 33 reliée aux sorties Q des bascules du registre auxiliaire $22_1$-$22_m$. Cette logique de détection 33, qui consiste simplement en une porte ET à $m$ entrées dans le cas où la valeur d'adresse exclue est 11...1, délivre un bit de sélection FRM qui est à 1 lorsque l'adresse exclue est détectée et à 0 sinon.

Les moyens 30 de gestion des cycles de lecture comprennent en outre un commutateur d'adresse 34 commandé par le bit FRM, un module de cadencement 35 et un module de gestion d'adresses 36. Le module 35 délivre le signal de commande de lecture RD fourni au groupement de registres 19. Ce signal RD est produit en réponse à l'impulsion du signal RR délivré par la porte ET 29, et correspond à cette impulsion prolongée pendant un cycle de l'horloge BCL, comme le montrent les figures 3 et 4.

Une porte à trois états 40 forme un commutateur de sortie du module d'entrée/sortie 16, avec son entrée reliée à la sortie Q de la dernière bascule $20_{m+n}$ du second registre à décalage, et sa sortie reliée à la ligne de données BDA. Cette porte à trois états 40 peut être commandée par le signal binaire de sélection CD qui est fourni à la porte OU EXCLUSIF 21, de manière à être à l'état déconnecté (ouvert) lorsque CD=0 et l'état passant (fermé) lorsque CD=1.

Le signal CD est délivré par le module de cadencement 35. Il reste au niveau 0 en dehors des cycles de transfert sur le bus 13 ainsi que pendant les cycles d'écriture. Pendant un cycle de lecture (figures 3 et 4), le signal CD reste au niveau 0 jusqu'à la détection de l'impulsion d'activation. Lorsqu'il détecte un front montant sur la sortie RR de la porte 29, le module 35 génère un front montant du signal CD qui est ensuite maintenu à 1 jusqu'à la fin des impulsions de synchronisation suivantes sur la ligne d'horloge BCL. Le module 35 maintient donc le signal CD à 1 jusqu'à avoir reçu $n$ impulsions de synchronisation sur la ligne BCL lorsque FRM=0, et jusqu'à avoir reçu $p$ impulsions de synchronisation lorsque FRM=1. L'impulsion de niveau 0 du signal de fin de cycle EORC est produite lorsque le signal CD revient à 0 (figures 3 et 4).

Lorsque FRM=0, le commutateur 34 est dans la position représentée sur la figure 5, de sorte qu'une impulsion du signal RD provoque la lecture d'un octet dans le groupement 19 à l'adresse présente dans le registre auxiliaire $22_1$-$22_m$. Le module de permutation circulaire 38 auquel sont fournis les bits de l'octet lu dans le groupement 19 est désactivé lorsque FRM=0, ce qui permet le transfert en parallèle de ces bits vers le registre à décalage $20_{m+1}$-$20_{m+n}$. Le bit de poids le plus fort de l'octet est d'abord fourni sur la ligne de données BDA via la porte 40, tandis que les autres bits de l'octet sont chargés dans les bascules $20_{m+2}$-$20_{m+n}$ du second registre à décalage. Ces autres bits sont ensuite délivrés en série sur la ligne de données BDA en réponse aux impulsions de synchronisation suivantes de l'horloge BCL. L'inversion de cette horloge par la porte OU EXCLUSIF 21 permet d'assurer la stabilité des données dans les intervalles de temps où BCL=1.

Dans un cycle de lecture directe, le commutateur 34 est positionné pour obtenir l'adresse de lecture $a$ depuis le module de gestion d'adresses 36. Lorsque cette adresse $a$ est fixe, le module 36 se réduit à des connexions fournissant la valeur constante $a$ au commutateur 34. Si les $p$ bits lus dans un cycle de lecture directe sont toujours les $p$ bits de poids les plus forts d'un des registres du groupement 19, le module de permutation circulaire 38 est inutile. Sinon, il est activé par le bit FRM=1 afin d'introduire le décalage requis, de $\delta$ bits, pour délivrer les bits souhaités vers la ligne de données BDA.

Il est possible de choisir, comme nombre de bits à transférer dans un cycle de lecture directe, un nombre $p$ supérieur à la taille $n$ des registres du groupement 19. Le fonctionnement est alors le même que celui décrit précédemment, sauf que le module de cadencement 35 doit réactiver le signal de commande de lecture RD toutes les $n$ impulsions de synchronisation, provoquant ainsi l'incrémentation de l'adresse fournie par le module 36 (consistant essentiellement en un compteur), et le transfert en parallèle vers le registre à décalage $20_{m+1}$-$20_{m+n}$ du contenu d'un nouveau registre du groupement 19 pointé par l'adresse incrémentée.

Les paramètres $p$ (nombre de bits transférés dans un cycle de lecture directe), $a$ (adresse de départ) et $\delta$ (décalage éventuel) peuvent être fixes, comme dans l'exemple précédemment décrit. Ils peuvent également être des paramètres programmables par le microprocesseur 10. Dans ce cas, les modules 35, 36 et 38, qui utilisent respectivement de ces paramètres $p$, $a$ et $\delta$ les obtiennent à partir de l'un des registres d'écriture du groupement 18. Pour modifier l'un ou l'autre de ces paramètres, le microprocesseur 10 peut simplement exécuter un cycle d'écriture dans le ou les registres en question, dont il connaît les adresses.

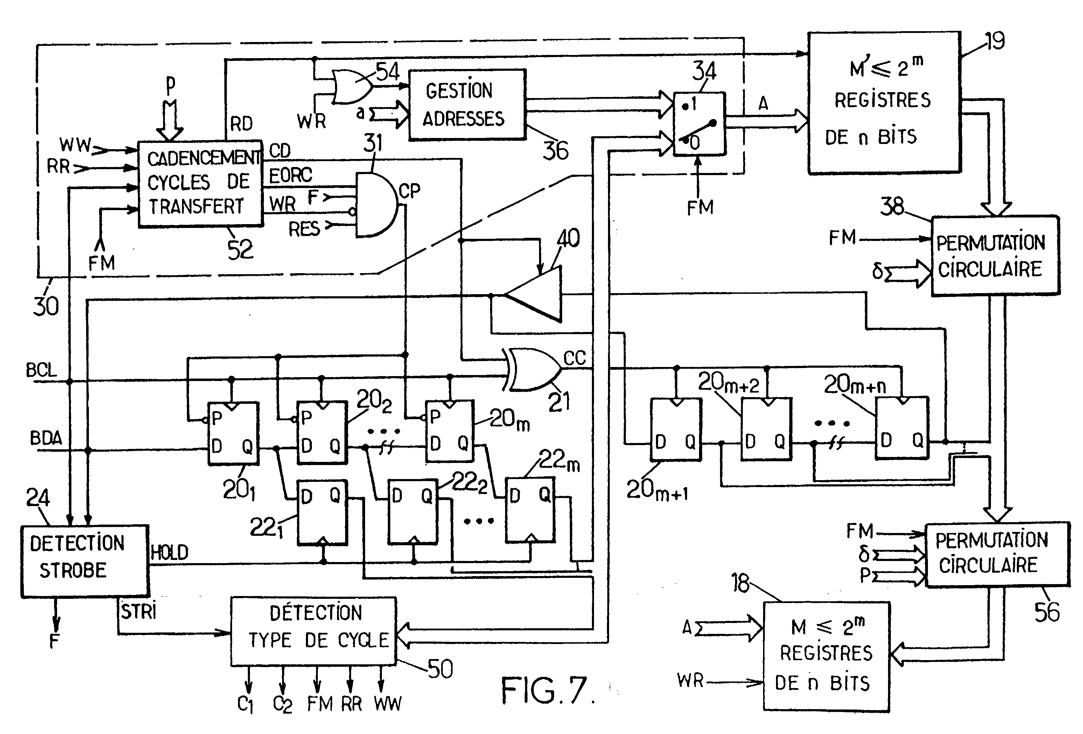

Dans la variante de réalisation représentée sur la figure 7, les cycles de transfert direct, sans adressage, ne sont pas limités à des cycles de lecture. Des cycles d'écriture directe sont également possibles. En outre, dans ce mode de réalisation, le bit de sélection de mode RW n'est pas transmis par le microprocesseur. La distinction entre les cycles de lecture et les cycles d'écriture est effectuée sur la base d'un décodage des adresses présentes dans le registre auxiliaire $22_1$-$22_m$ au moment de la détection de l'impulsion d'activation.

Le module d'entrée-sortie représenté sur la figure 7 présente de nombreux éléments communs avec celui de la figure 5, qui sont désignés par les mêmes références numériques. Le premier registre à décalage dont l'entrée est reliée à la ligne de données BDA du bus 13 comporte une bascule de moins étant donné que le bit RW n'a plus besoin d'être pris en compte. Les bascules $20_1$-$20_m$ subsistent et sont couplées de la même manière aux bascules $22_1$-$22_m$ du registre auxiliaire.

La sortie parallèle sur m bits du registre auxiliaire est reliée à une logique de détection des types de cycle 50, qui reçoit également le signal STRI délivré par le détecteur d'impulsions d'activation 24. La logique 50 opère un décodage des adresses contenues dans le registre auxiliaire $22_1$-$22_m$ au moment où elle reçoit une impulsion du signal STRI. Ce décodage obéit à des règles préétablies. A titre d'exemple non limitatif, ces règles peuvent consister en ce que (i) les adresses de la forme 1$xx...x$ (chaque $x$ valant 0 ou 1) soit utilisées par le microprocesseur dans des cycles de lecture avec adressage, (ii) les adresses de la forme 0$xx...x$ soient utilisées dans les cycles d'écriture avec adressage, (iii) l'adresse 111...1 soit une adresse de lecture exclue, dont la présence dans le registre auxiliaire $22_1$-$22_m$ caractérise un cycle de lecture directe, et (iv) l'adresse 011...1 soit une adresse d'écriture exclue dont la présence dans le registre $22_1$-$22_m$ caractérise un cycle d'écriture directe. Dans ce cas particulier, il y a autant d'emplacements adressables en lecture que d'emplacements adressables en écriture. Une table de décodage (éventuellement programmable par le microprocesseur 10) dans la logique 50 permet plus généralement toute combinaison de tailles de mémoire accessible en lecture et/ou en écriture.

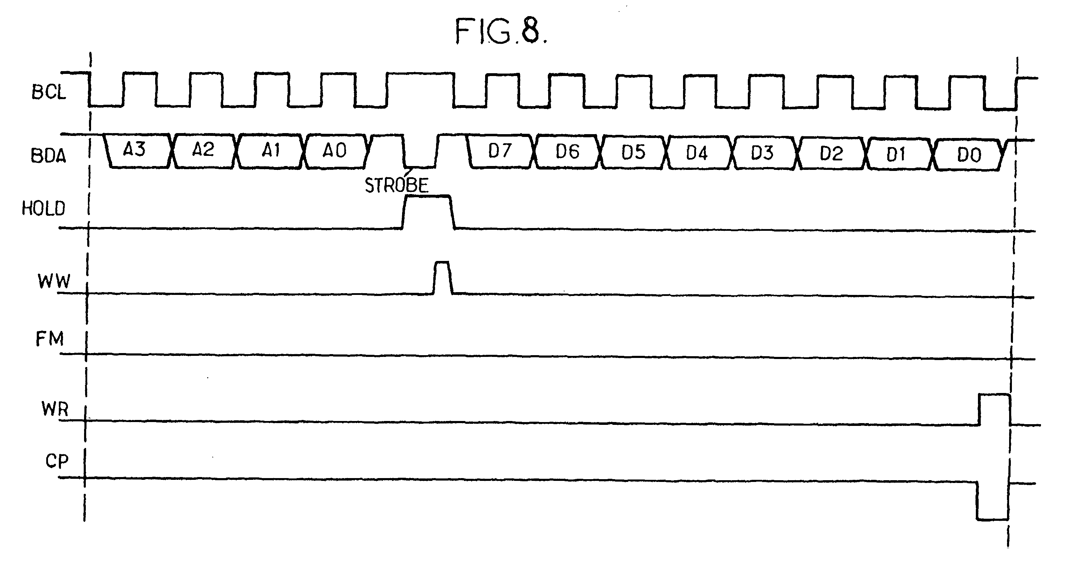

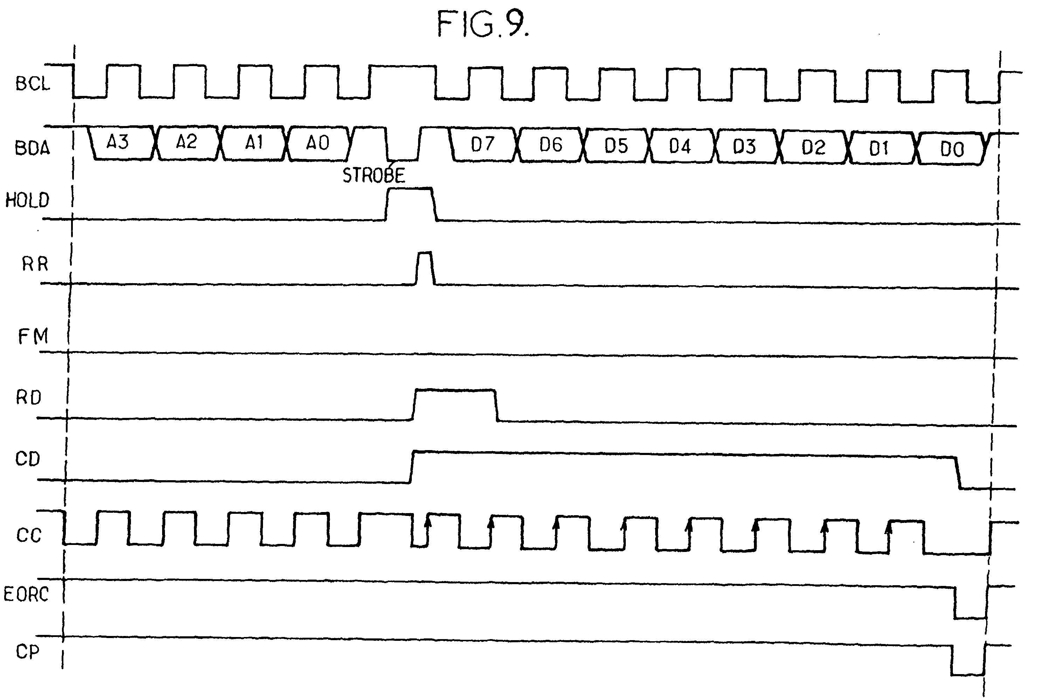

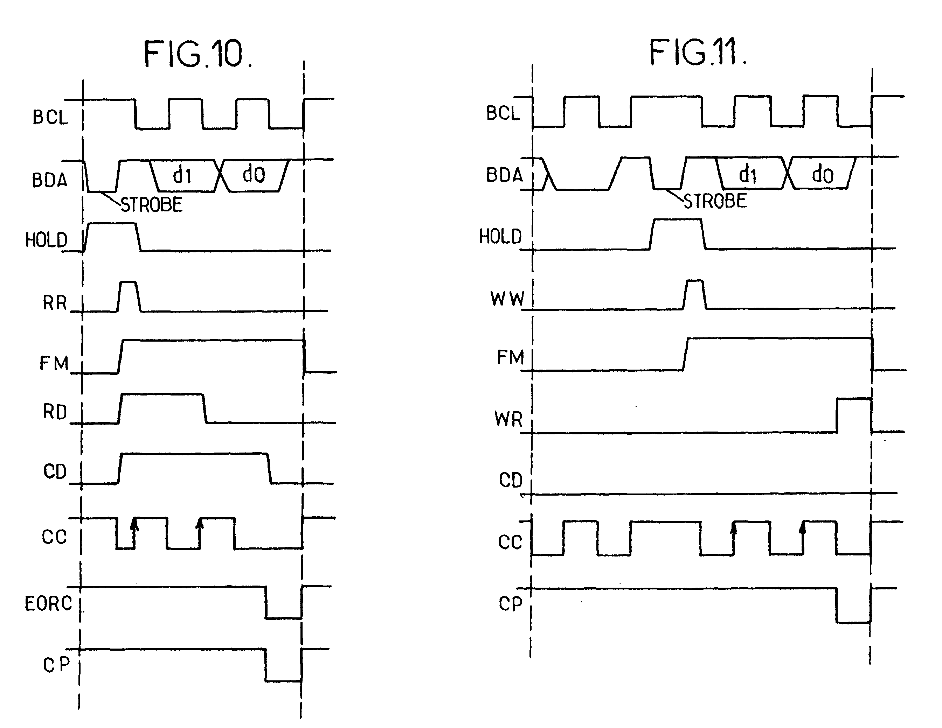

Lorsqu'un cycle de lecture (directe ou avec adressage) est détecté, la logique 50 produit une impulsion de niveau logique 1 sur le signal RR jouant le même rôle que celui décrit dans l'exemple de réalisation précédent (voir figures 9 et 10). Lorsqu'un cycle d'écriture (directe ou avec adressage) est détecté, la logique 50 produit de façon semblable une impulsion de niveau logique 1 sur le signal WW, comme indiqué sur les figures 8 et 11. Dans chaque cycle de transfert direct, la logique 50 active en outre un signal FM, jouant un rôle analogue à celui du signal FRM dans l'exemple de réalisation précédent (il commande notamment le commutateur d'adresses 34 qui délivre l'adresse A de lecture ou d'écriture, et éventuellement le module de permutation 38).

Comme illustré sur la figure 7, la logique de détection 50 pourrait encore produire des signaux de commande C1, C2, ... en réponse à la détection de certaines adresses particulières dans le registre auxiliaire $22_1$-$22_m$. Ce type de décodage permet éventuellement de transmettre des commandes à certains éléments de l'unité périphérique 12 sans avoir à transférer explicitement des données sur la ligne BDA.

Les signaux FM, RR et WW délivrés par la logique de détection 50 sont adressés au module 52 de cadencement des transferts faisant partie des moyens 30 de gestion des cycles de transfert et jouant un rôle semblable à celui du module 35 décrit en référence à la figure 5. Ce module 52 produit les signaux de commande de lecture RD et d'écriture WR adressés aux groupements de registres 19,18. La production des signaux RD, CD et EORC par le module 52 est identique à celle précédemment décrite (figures 9 et 10).

La production du signal de commande d'écriture WR tient compte du fait que, dans la variante considérée, les données écrites D7-D0 ou d1-d0 sont transmises sur la ligne de données BDA par le microprocesseur 10 après l'impulsion d'activation. Dans un cycle d'écriture avec adressage (FM=0), le module 52 retarde ainsi de $n$ cycles de l'horloge BCL l'activation du signal WR (figure 8). Dans le cas d'un cycle d'écriture directe, ce retard est de $p$ cycles de l'horloge BCL (figure 11).

Pour permettre le chargement des bits de données à écrire dans le second registre $20_{m+1}$-$20_{m+n}$, l'entrée série de ce registre, constituée par l'entrée D de la bascule $20_{m+1}$ est directement reliée à la ligne de données BDA, comme le montre la figure 7. Dans une autre variante de réalisation, on pourrait prévoir que l'entrée D de la bascule $20_{m+1}$ soit reliée ou bien à la sortie Q de la bascule $20_m$ ou bien à la ligne de données BDA selon la position d'un commutateur. Ce commutateur pourrait par exemple être commandé par un bit de commande C1 ou C2 délivré par la logique de détection 50 en réponse à une instruction codée du microprocesseur 10, ce qui permet au microprocesseur 10 de décider dynamiquement s'il transmet les données avant ou après l'impulsion d'activation dans les cycles d'écriture.

Comme le montre la figure 11 dans le cas particulier considéré ci-dessus pour le codage des adresses, le microprocesseur 10 présente un bit à 0 sur la ligne de données BDA en même temps qu'il exécute un cycle d'horloge sur la ligne BCL juste avant de transmettre l'impulsion d'activation dans les cycles d'écriture directe. Ceci permet de charger un bit à 0 dans les bas-

cules $20_1$ et $22_1$ afin de changer l'adresse par défaut 111... 1 caractérisant les cycles de lecture directe en l'adresse 011... 1 caractérisant les cycles d'écriture directe, afin de permettre le décodage adéquat par la logique de détection 50.

Si le nombre *p* de bits concernés par un cycle de transfert direct, en lecture ou en écriture, est supérieur à la taille *n* d'un registre des groupements 18,19, le signal de commande RD ou WR est réactivé périodiquement comme dans l'exemple précédent, et le compteur d'adresse 36 est incrémenté par la sortie d'une porte OU 54 recevant les signaux RD et WR. Le microprocesseur peut ainsi accéder à plusieurs registres au cours du même cycle de transfert direct.

On peut également prévoir un décalage δ dans la position des bits devant faire l'objet d'une écriture dans un cycle d'écriture direct. On prévoit pour cela, entre le registre $20_{m+1}$-$20_{m+n}$ et le groupement 18 de registres d'écriture, un module de permutation circulaire 56 commandé par le bit FM de la même manière que le module 38. Ce module 56 reçoit également le nombre p de bits concernés par le cycle d'écriture directe afin d'inhiber l'écriture dans les emplacements non concernés du registre adressé.

## Revendications

1. Procédé de transfert de données en série entre une unité principale (10) et une unité périphérique (12) reliées entre elles par un bus (13) comprenant une ligne de données (BDA) et une ligne d'horloge (BCL),

   dans lequel l'unité principale commande des cycles de transfert synchronisés au moyen de la ligne d'horloge, **caractérisé en ce que** lesdits cycles de transfert comprennent des cycles de transfert avec adressage et des cycles de transfert direct,
   dans lequel, au cours de chaque cycle, l'unité principale transmet sur la ligne de données une impulsion d'activation alors que la ligne d'horloge est à un premier niveau logique,
   dans lequel, avant de transmettre l'impulsion d'activation dans un cycle de transfert avec adressage, l'unité principale transmet sur la ligne de données des bits (A3-A0) d'une adresse de transfert, avec des impulsions de synchronisation correspondantes sur la ligne d'horloge,
   dans lequel, après avoir reçu l'impulsion d'activation dans un cycle de transfert avec adressage, l'unité périphérique accède à un emplacement de mémoire déterminé à partir de l'adresse de transfert pour écrire ou lire des bits de données (D7-D0) présentés successivement sur la ligne de données en synchronisme avec des impulsions de synchronisation correspondantes sur la ligne d'horloge,
   et dans lequel, après avoir reçu l'impulsion d'activation dans un cycle de transfert direct, l'unité périphérique accède à un emplacement déterminé préalablement audit cycle de transfert direct pour écrire ou lire des bits de données (d1-d0) présentés successivement sur la ligne de données en synchronisme avec des impulsions de synchronisation reçues sur la ligne d'horloge.

2. Procédé selon la revendication 1, dans lequel, dans un cycle de transfert direct, l'unité principale (10) transmet l'impulsion d'activation au début du cycle.

3. Procédé selon la revendication 2, dans lequel, avant de transmettre l'impulsion d'activation dans un cycle de transfert avec adressage, l'unité principale (10) transmet en outre sur la ligne de données un bit de sélection de mode (RW) ayant une première valeur si ledit cycle de transfert avec adressage est un cycle d'écriture, et une seconde valeur, complémentaire de la première valeur, si ledit cycle de transfert avec adressage est un cycle de lecture.

4. Procédé selon la revendication 3, dans lequel la ligne de données (BDA) est reliée à l'entrée d'un registre à décalage ($20_0$-$20_m$) de l'unité périphérique (12) cadencé par la ligne d'horloge (BCL) et de taille suffisante pour contenir les bits d'adresse (A3-A0) et le bit de sélection de mode (RW) transmis dans un cycle de transfert avec adressage, dans lequel au moins une valeur d'adresse est exclue pour les adresses de transfert transmises par l'unité principale (10) dans les cycles de lecture avec adressage, et dans lequel, au moment où elle détecte une impulsion d'activation, l'unité périphérique examine le contenu dudit registre à décalage pour déterminer si l'impulsion d'activation détectée fait partie d'un cycle d'écriture avec adressage, d'un cycle de lecture avec adressage ou d'un cycle de lecture directe, un cycle de lecture directe étant choisi si le registre à décalage contient la valeur d'adresse exclue et un bit de sélection de mode ayant ladite seconde valeur.

5. Procédé selon la revendication 4, dans lequel l'unité principale (10) maintient la ligne d'horloge (BCL) au premier niveau logique lorsqu'elle n'effectue aucun cycle de transfert, et dans lequel l'unité principale et l'unité périphérique (12) transmettent les bits de données, d'adresse et de sélection de mode dans lesdits cycles de transfert de façon telle que les transitions entre ces bits aient lieu alors que la ligne d'horloge est à un second niveau logique complémentaire du premier niveau logique.

6. Procédé selon la revendication 5, dans lequel, pendant que la ligne d'horloge (BCL) est au premier niveau logique, l'unité périphérique (12) examine la ligne de données (BDA) pour détecter des changements de niveau logique non attribuables à une impulsion d'activation, et pour écrire la valeur d'adresse exclue et un bit de sélection de mode ayant ladite seconde valeur dans le registre à décalage ($20_0$-$20_m$) en réponse à une telle détection.

**7.** Procédé selon la revendication 6, dans lequel la ligne d'horloge (BCL) et la ligne de données (BDA) sont utilisées par l'unité principale (10) pour échanger des données avec d'autres unités selon un protocole dans lequel la ligne de données ne change pas de niveau logique plus d'une fois pendant que la ligne d'horloge est au premier niveau logique.

**8.** Procédé selon la revendication 1 ou 2, comprenant une étape de décodage des bits (A3-A0) de l'adresse de transfert reçue par l'unité périphérique (12) dans un cycle de transfert avec adressage, afin de déterminer si ledit cycle de transfert avec adressage est un cycle d'écriture ou un cycle de lecture.

**9.** Procédé selon la revendication 8, dans lequel la ligne de données (BDA) est reliée à l'entrée d'un registre à décalage ($20_1$-$20_m$) de l'unité périphérique (12) cadencé par la ligne d'horloge (BCL) et de taille suffisante pour contenir les bits d'adresse (A3-A0) transmis dans un cycle de transfert avec adressage, dans lequel au moins une valeur d'adresse est exclue pour les adresses de transfert transmises par l'unité principale (10) dans les cycles de transfert avec adressage, et dans lequel, au moment où elle détecte une impulsion d'activation, l'unité périphérique examine le contenu dudit registre à décalage pour déterminer si l'impulsion d'activation détectée fait partie d'un cycle de transfert avec adressage ou d'un cycle de transfert direct, un cycle de transfert direct étant choisi si le registre à décalage contient une valeur d'adresse exclue.

**10.** Procédé selon la revendication 9, dans lequel les cycles de transfert direct comprennent des cycles d'écriture directe et des cycles de lecture directe, respectivement choisis quand le registre à décalage ($20_1$-$20_m$) contient des première et seconde valeurs d'adresse exclues, qui ne diffèrent l'une de l'autre que par un bit situé dans un emplacement d'entrée ($20_1$) du registre à décalage.

**11.** Procédé selon la revendication 10, dans lequel l'unité principale (10) maintient la ligne d'horloge (BCL) au premier niveau logique lorsqu'elle n'effectue aucun cycle de transfert, et dans lequel l'unité principale et l'unité périphérique (12) transmettent les bits de données et d'adresse de transfert dans lesdits cycles de transfert de façon telle que les transitions entre ces bits aient lieu alors que la ligne d'horloge est à un second niveau logique complémentaire du premier niveau logique.

**12.** Procédé selon la revendication 11, dans lequel, pendant que la ligne d'horloge (BCL) est au premier niveau logique, l'unité périphérique (12) examine la ligne de données (BDA) pour détecter des changements de niveau logique non attribuables à une impulsion d'activation, et pour écrire dans le registre à décalage ($20_1$-$20_m$), en réponse à une telle détection, une valeur d'adresse par défaut correspondant à l'une des première et seconde valeurs d'adresse exclues.

**13.** Procédé selon la revendication 12, dans lequel, dans un cycle de transfert direct du type choisi quand le registre à décalage ($20_1$-$20_m$) contient la valeur d'adresse par défaut, l'unité principale (10) transmet l'impulsion d'activation au début du cycle, et dans lequel, dans un cycle de transfert direct du type choisi quand le registre à décalage contient celle des première et seconde valeurs d'adresse exclues qui ne correspond pas à la valeur d'adresse par défaut, l'unité principale (10) transmet l'impulsion d'activation juste après la transmission, au début du cycle, d'un bit modifiant celui situé dans l'emplacement d'entrée ($20_1$) du registre à décalage.

**14.** Procédé selon la revendication 12 ou 13, dans lequel la ligne d'horloge (BCL) et la ligne de données (BDA) sont utilisées par l'unité principale (10) pour échanger des données avec d'autres unités selon un protocole dans lequel la ligne de données ne change pas de niveau logique plus d'une fois pendant que la ligne d'horloge est au premier niveau logique.

**15.** Procédé selon l'une quelconque des revendications précédentes, dans lequel l'emplacement où sont lus ou écrits les bits de données (d1-d0) dans un cycle de transfert direct est un emplacement fixe.

**16.** Procédé selon l'une quelconque des revendications 1 à 14, dans lequel l'emplacement où sont lus ou écrits les bits de données dans un cycle de transfert direct est déterminé à partir d'une information transmise par l'unité principale (10) au cours d'un cycle d'écriture antérieur.

**17.** Procédé selon la revendication 16, dans lequel le nombre *(p)* de bits de données transmis successivement dans un cycle de transfert direct est déterminé à partir d'une information transmise par l'unité principale (10) au cours d'un cycle d'écriture antérieur.

**18.** Procédé selon l'une quelconque des revendications précédentes, dans lequel le bus (13) comprend en outre une ligne d'interruption (INT) sur laquelle l'unité périphérique (12) envoie une requête d'interruption à l'unité principale (10) lorsqu'elle détecte un événement parmi un ensemble d'événements déterminés, l'unité périphérique comportant un registre d'état pour contenir des bits indiquant respectivement les événements dudit ensemble qui ont été détectés, et dans lequel, lorsqu'elle reçoit une requête sur la ligne d'interruption, l'unité principale commande les cycles de transfert suivants :

- un cycle de lecture directe pour lire une portion déterminée du registre d'état ; et
- si les bits contenus dans ladite portion du registre d'état n'indiquent pas une détection d'événement, au moins un cycle de lecture avec adressage pour lire le reste du registre d'état.

19. Procédé selon l'une quelconque des revendications précédentes, dans lequel les cycles de transfert direct comprennent des cycles de transfert de commandes (C1,C2) de l'unité principale (10) vers l'unité périphérique (12).

20. Interface de bus série synchrone pour une unité périphérique (12) commandée par une unité principale (10) par l'intermédiaire d'un bus (13) incluant une ligne de données (BDA) et une ligne d'horloge (BCL), **caractérisé par**

- des moyens de détection d'impulsions d'activation (24), pour détecter des impulsions d'activation survenant sur la ligne de données du bus alors que la ligne d'horloge du bus est à un premier niveau logique;
- un premier registre à décalage ($20_0$-$20_m$ ; $20_1$-$20_m$) cadencé par la ligne d'horloge du bus, ayant une entrée de données en série reliée à la ligne de données ;
- un second registre à décalage ($20_{m+1}$-$20_{m+n}$) ayant une entrée de données en série reliée à la sortie de données en série du premier registre à décalage ou à la ligne de données, et cadencé par la sortie d'une porte OU EXCLUSIF (21) dont une entrée est reliée à la ligne d'horloge du bus et l'autre entrée reçoit un signal binaire de sélection (CD) ;
- un commutateur de sortie (40) relié d'une part à la sortie de données en série du second registre à décalage et d'autre part à la ligne de données du bus ;
- des moyens d'identification de cycle de transfert (28,29,33;50), pour analyser le contenu du premier registre à décalage lorsqu'une impulsion d'activation est détectée de manière à identifier chaque cycle de transfert dont fait partie une impulsion d'activation détectée ;
- des registres d'écriture (18) adressables à partir d'une adresse d'écriture obtenue à partir du premier registre à décalage lorsqu'un cycle d'écriture avec adressage a été identifié, cycle d'écriture avec adressage dans lequel le signal binaire de sélection est maintenu à 0, le commutateur de sortie est maintenu ouvert et la détection de l'impulsion d'activation est suivie par le transfert en parallèle du contenu du second registre à décalage dans le registre d'écriture désigné par l'adresse d'écriture ;
- des registres de lecture (19) adressables à partir d'une adresse de lecture lorsqu'un cycle de lecture a été identifié, cycle de lecture dans lequel la détection de l'impulsion d'activation est suivie par le transfert en parallèle d'une partie au moins du contenu du registre de lecture désigné par l'adresse de lecture dans le second registre à décalage et par le transfert en série du contenu du second registre à décalage vers le commutateur de sortie, transfert en série pendant lequel le signal binaire de sélection est mis à 1 et le commutateur de sortie est fermé ; et
- des moyens de gestion des cycles de transfert (30) pour obtenir l'adresse de lecture à partir du premier registre à décalage lorsqu'un cycle de lecture avec adressage a été identifié, et pour fournir une adresse de lecture préalablement déterminée (a) lorsqu'un cycle de lecture directe a été identifié.

21. Interface de bus série synchrone selon la revendication 20, dans laquelle l'adresse de lecture (a) fournie par les moyens de gestion des cycles de transfert (30) dans un cycle de lecture directe est une adresse fixe.

22. Interface de bus série synchrone selon la revendication 20, dans laquelle l'adresse de lecture (*a*) fournie par les moyens de gestion des cycles de transfert (30) dans un cycle de lecture directe est obtenue à partir du contenu d'un des registres d'écriture.

23. Interface de bus série synchrone selon la revendication 22, dans laquelle le nombre (*p*) de bits transférés vers le commutateur de sortie (40) dans un cycle de lecture directe est obtenu à partir du contenu d'un des registres d'écriture.

24. Interface de bus série synchrone selon l'une quelconque des revendications 20 à 23, dans laquelle au moins une valeur d'adresse est exclue dans les cycles de lecture avec adressage, et dans laquelle les moyens d'identification de cycle de transfert (28,29,33) examinent le contenu du premier regis-

tre à décalage ($20_0$-$20_m$) lorsqu'une impulsion d'activation a été détectée afin d'identifier un cycle de lecture directe si le premier registre à décalage contient l'adresse exclue.

25. Interface de bus série synchrone selon la revendication 24, dans laquelle la synchronisation des transferts par l'unité principale (10) est telle que les transitions entre les bits transmis aient lieu alors que la ligne d'horloge (BCL) est à un second niveau logique complémentaire du premier niveau logique, et que la ligne d'horloge soit maintenue au premier niveau logique lorsqu'aucun cycle de transfert n'est effectué, et dans laquelle des moyens de filtrage (27,31) sont prévus pour écrire la valeur d'adresse exclue dans le premier registre à décalage ($20_0$-$20_m$) en réponse à des changements de niveau logique non attribuables à une impulsion d'activation, survenant sur la ligne de données (BDA) pendant que la ligne d'horloge (BCL) est au premier niveau logique.

26. Interface de bus série synchrone selon la revendication 25, dans laquelle les moyens de filtrage (31) sont en outre agencés pour écrire la valeur d'adresse exclue dans le premier registre à décalage ($20_0$-$20_m$) à la fin de chaque cycle d'écriture.

27. Interface de bus série synchrone l'une quelconque des revendications 20 à 26, dans laquelle les registres d'écriture (18) sont en outre adressables, lorsqu'un cycle d'écriture directe a été identifié, à partir d'une adresse d'écriture préalablement déterminée (*a*), cycle d'écriture directe dans lequel le signal binaire de sélection est maintenu à 0, le commutateur de sortie est maintenu ouvert et la détection de l'impulsion d'activation est suivie par le transfert en parallèle du contenu du second registre à décalage dans le registre d'écriture désigné par l'adresse d'écriture.

**Patentansprüche**

1. Verfahren zur seriellen Datenübertragung zwischen einer Zentraleinheit (10) und einer peripheren Einheit (12), die miteinander durch einen Bus (13) verbunden sind, der eine Datenleitung (BDA) und eine Taktleitung (BCL) umfasst,
   bei dem die Zentraleinheit synchronisierte Übertragungszyklen mit Hilfe der Taktleitung steuert, **dadurch gekennzeichnet, dass** diese Übertragungszyklen Übertragungszyklen mit Adressierung und Direktübertragungszyklen umfassen,
   bei dem die Zentraleinheit während jedes Zyklus auf der Datenleitung einen Aktivierungsimpuls überträgt, während sich die Taktleitung bei einem ersten Logikpegel befindet,

   bei dem die Zentraleinheit vor der Übertragung des Aktivierungsimpulses in einem Übertragungszyklus mit Adressierung Bits (A3-A0) einer Übertragungsadresse auf der Datenleitung mit entsprechenden Synchronisierimpulsen auf der Taktleitung überträgt,
   bei dem die periphere Einheit nach Empfang des Aktivierungsimpulses in einem Übertragungszyklus mit Adressierung auf einen Speicherplatz zugreift, der von der Übertragungsadresse aus festgelegt wird, um Datenbits (D7-D0) zu schreiben oder zu lesen, die nacheinander auf der Datenleitung synchron mit entsprechenden Synchronisierimpulsen auf der Taktleitung auftreten,
   und bei dem die periphere Einheit nach Empfang des Aktivierungsimpulses in einem Direktübertragungszyklus auf einen Speicherplatz zugreift, der In diesem Direktübertragungszyklus vorher festgelegt wurde, um Datenbits (d1-d0) zu schreiben oder zu lesen, die nacheinander auf der Datenleitung synchron mit den empfangenen Synchronisierimpulsen auf der Taktleitung auftreten.

2. verfahren nach Anspruch 1,
   bei dem die Zentraleinheit (10) in einem Direktübertragungszyklus den Aktivierungsimpuls zu Beginn des Zyklus überträgt.

3. Verfahren nach Anspruch 2,
   bei dem die Zentraleinheit (10) vor der Übertragung des Aktivierungsimpulses in einem Übertragungszyklus mit Adressierung ferner auf der Datenleitung ein Modusauswahl-Bit (RW) überträgt, das einen ersten Wert hat, wenn der Übertragungszyklus mit Adressierung ein Schreibzyklus ist, und das einen zweiten zum ersten Wert komplementären Wert hat, wenn der Übertragungszyklus mit Adressierung ein Lesezyklus ist.

4. Verfahren nach Anspruch 3,
   bei dem die Datenleitung (BDA) mit dem Eingang eines Schieberegisters ($20_0$-$20_m$) der peripheren Einheit (12) verbunden ist, das durch die Taktleitung (BCL) getaktet wird und groß genug ist, die Adress-Bits (A3-A0) und das in einem Übertragungszyklus mit Adressierung übertragene Modusauswahl-Bit (RW) zu umfassen, bei dem wenigstens ein Adresswert für die durch die Zentraleinheit (10) in den Lesezyklen mit Adressierung übertragenen Übertragungsadressen ausgeschlossen wird, und bei dem die periphere Einheit beim Erfassen eines Aktivierungsimpulses den Inhalt dieses Schieberegisters prüft, um festzulegen, ob der erfasste Aktivierungsimpuls zu einem Schreibzyklus mit Adressierung, einem Lesezyklus mit Adressierung oder einem Direkdesezyklus gehört, wobei der Direktiesezyklus gewählt wird, wenn das Schieberegister den ausgeschlossenen Adresswert und ein den zweiten Wert aufweisendes Modusauswahl-Bit umfasst.

**5.** Verfahren nach Anspruch 4,
bei dem die Zentraleinheit (10) die Taktleitung (BCL) bei dem ersten Logikpegel hält, wenn sie keinen Übertragungszyklus ausführt, und bei dem die Zentraleinheit und die periphere Einheit (12) die Daten-, Adress- und Modusauwahl-Bits in diesen Übertragungszyklen derart übertragen, dass es zu Übergängen zwischen diesen Bits kommt, während sich die Taktleitung bei einem zum ersten Logikpegel komplementären zweiten Logikpegel befindet.

**6.** Verfahren nach Anspruch 5,
bei dem die periphere einheit (12) die Datenleitung (BDA) prüft, während sich die Taktleitung (CL) bei dem ersten Logikpegel befindet, um Änderungen des Logikpegels zu erfassen, die einem Aktivierungsimpuls nicht zuordenbar sind, und um den ausgeschlossenen Adresswert und ein den zweiten Wert ($20_0$-$20_m$) aufweisendes Modusauswahl-Bit als Antwort auf eine derartige Erfassung in das Schieberegister zu schreiben.

**7.** Verfahren nach Anspruch 6,
bei dem die Taktleitung (BCL) und die Datenleitung (BDA) von der Zentraleinheit (10) verwendet werden, um mit anderen Einheiten Daten gemäß einem Protokoll auszutauschen, bei dem die Datenleitung nicht mehr als einmal den Logikpegel ändert, während sich die Taktleitung bei dem ersten Logikpegel befindet.

**8.** Verfahren nach Anspruch 1 oder 2,
mit einer Phase zum Dekodieren der Bits (A3-A0) der von der peripheren Einheit (12) in einem übertragungszyklus mit Adressierung empfangenen Übertragungsadresse, um festzulegen, ob dieser Übertragungszyklus mit Adressierung ein Schreibzyklus oder ein Lesezyklus ist.

**9.** Verfahren nach Anspruch 8,
bei dem die Datenleitung (BDA) mit dem Eingang eines Schieberegisters ($20_1$-$20_m$) der peripheren Einheit (12) verbunden ist, das durch die Taktleltung (BCL) getaktet wird und groß genug ist, die in einem Übertragungszyklus mit Adressierung übertragenen Adress-Bits (A3-A0) zu umfassen, bei dem wenigstens ein. Adresswert für die von der Zentraleinheit (10) in den Übertragungszyklen mit Adressierung übertragenen Übertragungsadressen ausgeschlossen wird, und bei dem die periphere Einheit beim Erfassen eines Aktivierungsimpulses den Inhalt dieses Schieberegisters prüft, um festzulegen, ob der erfasste Aktivierungsimpuls zu einem Übertragungszyklus mit Adressierung oder einem Direktübertragungszyklus gehört, wobei ein Direktübertragungszyklus gewählt wird, wenn das Schleberegister einen ausgeschlossenen Adresswert umfasst.

**10.** Verfahren nach Anspruch 9,
bei dem die Direktübertragungszyklen Direktschreibzyklen und Direktlesezyklen umfassen, die jeweils gewählt werden, wenn das Schieberegister ($20_1$-$20_m$) erste oder zweite ausgeschlossene Adresswerte enthält, die sich von einander nur durch ein Bit unterscheiden, das sich an einer Eingangsstelle ($20_1$) des Schieberegisters befindet.

**11.** Verfahren nach Anspruch 10,
bei dem die Zentraleinheit (10) die Taktleitung (BCL) bei dem ersten Logikpegel hält, wenn sie keinen Übertragungszyklus ausführt, und bei dem die Zentraleinheit und die periphere Einheit (12) in diesen Übertragungszyklen die Daten- und Übertragungsadress-Bits derart übertragen, dass es zu Übergängen zwischen diesen Bits kommt, während sich die Taktleitung bei einem zum ersten Logikpegel komplementären zweiten Logikpegel befindet.

**12.** Verfahren nach Anspruch 11,
bei dem die periphere Einheit (12) die Datenleitung (BDA) prüft, während sich die Taktleitung (BCL) bei dem ersten Logikpegel befindet, um Änderungen des Logikpegels zu erfassen, die einem Aktivierungsimpuls nicht zuordenbar sind, und um einen dem ersten oder dem zweiten ausgeschlossenen Adresswert entsprechenden Default Adresswert in das Schieberegister ($20_1$-$20_m$) als Antwort auf eine derartige Erfassung zu schreiben.

**13.** Verfahren nach Anspruch 12,
bei dem die Zentraleinheit (10) in einem Direktübertragungszyklus, der gewählt wird, wenn das Schieberegister ($20_1$-$20_m$) den Default-Adresswert enthält, den Aktivierungsimpuls zu Beginn des Zyklus überträgt, und bei dem die Zentraleinheit (10) in einem Direktübertragungszyklus, der gewählt wird, wenn das Schieberegister denjenigen des ersten oder zweiten ausgeschlossenen Adresswertes enthält, der nicht dem Default-Adresswert entspricht, den Aktivierungsimpuls zu Beginn des Zyklus unmittelbar nach Übertragung eines Bits überträgt, das dasjenige verändert, das sich an der Eingangsstelle ($20_1$) des Schieberegisters befindet.

**14.** Verfahren nach Anspruch 12 oder 13,
bei dem die Taktleitung (BCL) und die Datenleitung (BDA) von der Zentraleinheit (10) verwendet werden, um mit anderen Einheiten gemäß einem Protokoll Daten auszutauschen, bei dem die Datenleitung nicht mehr als einmal den Logikpegel ändert, während sich die Taktleitung bei dem ersten Logikpegel befindet.

**15.** Verfahren nach einem der vorhergehenden Ansprüche bei dem der Speicherplatz, an dem die Datenbits (d1-d0) in einem Direktübertragungszyklus gelesen oder geschrieben werden, ein fester Speicherplatz ist.

**16.** Verfahren nach einem der Ansprüche 1 bis 14, bei dem der Speicherplatz, an dem die Datenbits in einem Direktübertragungszyklus gelesen oder geschrieben werden, ausgehend von einer durch die Zentraleinheit (10) während eines vorherigen Schreibzyklus übertragenen Information festgelegt wird.

**17.** Verfahren nach Anspruch 16, bei dem die Anzahl (p) der in einem Direktübertragungszyklus nacheinander übertragenen Datenbits ausgehend von einer durch die Zentraleinheit (10) während eines vorherigen Schreibzyklus übertragenen Information festgelegt wird.

**18.** Verfahren nach einem der vorhergehenden Ansprüche, bei dem der Bus (13) ferner eine Unterbrechungsleitung (INT) umfasst, auf der die periphere Einheit (12) eine Unterbrechungsabfrage an die Zentraleinheit (10) sendet, wenn sie ein Ereignis unter einer Reihe bestimmter Ereignisse erfasst, wobei die periphere Einheit ein Statusregister zum Aufnehmen von Bits umfasst, die jeweils die Ereignisse dieser Reihe angeben, die erfasst wurden, und bei dem die Zentraleinheit beim Empfang einer Abfrage auf der Unterbrechungsleitung die folgenden Übertragungszyklen steuert:

- einen Direkttesezyklus zum Lesen eines bestimmten Teils des Statusregisters; und
- sofern die in diesem Teil des Statusregisters enthaltenen Bits nicht eine Erfassung von Ereignissen anzeigen, wenigstens einen Lesezyklus mit Adressierung zum Lesen des restlichen Teils des Statusregisters.

**19.** Verfahren nach einem der vorhergehenden Ansprüche, bei dem die Direktübertragungszyklen Zyklen zur Übertragung von Befehlen (C1, C2) von der Zentraleinheit (10) zur peripheren Einheit (12) umfassen.

**20.** Synchron-serielle Bus-Schnittstelle für eine periphere Einheit (12), die durch eine Zentraleinheit (10) über einen eine Datenleitung (BDA) und eine Taktleitung (BCL) beinhaltenden Bus (13) gesteuert wird, **gekennzeichnet durch**

- Mittel zur Erfassung von Aktivierungsimpulsen (24), um auf der Datenleitung des Busses auftretende Aktivierungsimpulse zu erfassen, während sich die Taktleitung des Busses bei einem ersten Logikpegel befindet;
- ein erstes Schieberegister ($20_0$-$20_m$; $20_1$-$20_m$), das **durch** die Takbeitung des Busses getaktet wird und einen mit der Datenleitung verbundenen seriellen Dateneingang hat,
- ein zweites Schieberegister ($20_{m+1}$-$20_{m+n}$), das einen mit dem seriellen Datenausgang des ersten Schieberegisters oder mit der Datenleitung verbundene seriellen Dateneingang hat und **durch** den Ausgang eines XOR-Gatters (21) getaktet wird, dessen einer Eingang mit der Taktleitung des Busses verbunden ist und dessen anderer Eingang ein binäres Selektionssignal (CD) empfängt;
- einen Ausgangsschalter (40), der zum einen mit dem seriellen Datenausgang des zweiten Schieberegisters und zum anderen mit der Datenleitung des Busses verbunden ist;
- Mittel zum Identifizieren von Übertragungszyklen (28, 29, 33; 50) zum Untersuchen des Inhalts des ersten Schieberegisters, wenn ein Aktivierungsimpuls erfasst wird, um jeden Übertragungszyklus zu identifizieren, zu dem ein erfasster Aktivierungsimpuls gehört;
- Schreibregister (18), die von einer Schreibadresse aus adressierbar sind, die man von einem ersten Schieberegister aus erhält, wenn ein Schreibzyklus mit Adressierung identifiziert worden ist, bei dem das binäre Selektionssignal bei 0 gehalten wird, der Ausgangsschalter offen gehalten wird und auf die Erfassung des Aktivierungsimpulses die parallele Übertragung des Inhalts des zweiten Schieberegisters in das **durch** die Schreibadresse bezeichnete Schreibregister folgt;
- Leseregister (19), die von einer Leseadresse aus adressierbar sind, wenn ein Lesezyklus identifiziert worden ist, bei dem auf die Erfassung des Aktivierungsimpulses die parallele Übertragung wenigstens eines Teils des Inhalts des **durch** die Leseadresse bezeichneten Leseregisters In das zweite Schieberegister und die serielle Übertragung des Inhalts des zweiten Schieberegisters zu dem Ausgangsschalter folgt, während der das binäre Selektionssignal auf 1 gestellt wird und der Ausgangsschalter geschlossen ist; und
- Mittel zum Steuern der Übertragungsryklen (30) zum Erhalt der Leseadresse ausgehend von dem ersten Schieberegister, wenn ein Lesezyklus mit Adressierung identifiziert worden ist, und zum Liefern einer vorher bestimmten Leseadresse (a), wenn ein Direktlesezyklus identifiziert worden ist.

**21.** Synchron-serielle Bus-Schnittstelle nach Anspruch 20, bei der die Leseadresse (a), die durch die Mittel zum Steuern der Übertragungszyklen (30) in einem Direktlesezyklus geliefert wird, eine feste Adresse ist.

**22.** Synchron-serielle Bus-Schnittstelle nach Anspruch 20, bei der die Leseadresse (a), die durch die Mittel zum Steuern der Übertragungszyklen (30) In einem Direkdesezyklus geliefert wird, ausgehend von dem Inhalt eines der Schreibregister erlangt wird.

**23.** Synchron-serielle Bus-Schnittstelle nach Anspruch 22, bei der die Anzahl (p) der Bits, die in einem Direktlesezyklus zu dem Ausgangsschalter (40) übertragen werden, ausgehend von dem Inhalt eines der Schreibregister erlangt wird.

**24.** Synchron-serielle Bus-Schnittstelle nach einem der Ansprüche 20 bis 23, bei der wenigstens ein Adresswert in den Lesezyklen mit Adressierung ausgeschlossen ist, und bei der die Mittel zum Identifizieren des Übertragungszyklus (28, 29, 33) den Inhalt des ersten Schieberegisters ($20_0$-$20_m$) prüfen, wenn ein Aktivierungsimpuls erfasst worden ist, um einen Direktlesezyklus zu identifizieren, wenn das erste Schieberegister die ausgeschlossene Adresse enthält.

**25.** Synchron-serielle Bus-Schnittstelle nach Anspruch 24, bei der die Synchronisierung der Übertragungen durch die Zentraleinheit (10) derart ist, dass es zu Übergänge zwischen den übertragenen Bits kommt, während sich die Taktleitung (BCL) bei einem zum ersten Logikpegel komplementären zweiten Logikpegel befindet, und dass die Taktleitung bei dem ersten Logikpegel gehalten wird, wenn kein Übertragungszyklus ausgeführt wird, und bei der Fittermittel (27, 31) vorgesehen sind, um den ausgeschlossenen Adresswert in das erste Schieberegister ($20_0$-$20_m$) als Antwort auf Änderungen des Logikpegels zu schreiben, die einem Aktivierungsimpuls nicht zuordenbar sind und auf der Datenleitung (BDA) auftreten, während sich die Taktleitung (BCL) bei dem ersten Logikpegel befindet.

**26.** Synchron-serielle Bus-Schnittstelle nach Anspruch 25, bei der die Filtermittel (31) ferner angeordnet sind, um den ausgeschlossenen Adresswert am Ende eines jeden Schreibzyklus in das erste Schieberegister ($20_0$-$20_m$) zu schreiben.

**27.** Synchron-serielle Bus-Schnittstelle nach einem der Ansprüche 20 bis 26, bei der die Schreibregister (18) ferner ausgehend von einer vorher bestimmten Schrelbadresse (a) adressierbar sind, wenn ein Direktschreibzyklus identifiziert worden ist, bei dem das binäre Selektionssignal auf 0 gehalten wird, der Ausgangsschalter offen bleibt und auf die Erfassung des Aktivierungsimpulses die parallele Übertragung des Inhalts des zweiten Schieberegisters in das durch die Schreibadresse bezeichnete Schreibregister folgt.

## Claims

**1.** A process for serial data transfer between a main processing unit (10) and a peripheral unit (12) connected to each other by a bus (13) including a data line (BDA) and a clock line (BCL),
wherein the main processing unit controls synchronised transfer cycles by means of the clock line, **characterized in that** said transfer cycles include transfer cycles with addressing and direct transfer cycles,
wherein, during each cycle, the main processing unit transmits on the data line a strobe pulse while the clock line is at a first logic level,
wherein, before transmitting the strobe pulse in a transfer cycle with addressing, the main processing unit transmits on the data line bits (A3-A0) of a transfer address, with corresponding synchronisation pulses on the dock line,
wherein, after receiving the strobe pulse in a transfer cycle with addressing, the peripheral unit accesses to a memory location determined from the transfer address to write or read data bits (D7-D0) successively presented on the data line synchronously with corresponding synchronisation pulses on the clock line,
and wherein, after receiving the strobe pulse in a direct transfer cycle, the peripheral unit accesses to a memory location determined prior to said direct transfer cycle to write or read data bits (d1-d0) successively presented on the data line synchronously with corresponding synchronisation pulses on the clock line.

**2.** A process in accordance with claim 1, wherein, in a direct transfer cycle, the main processing unit (10) transmits the strobe pulse at the beginning of the cycle.

**3.** A process in accordance with claim 2, wherein, before transmitting the strobe pulse in a transfer cycle with addressing, the main processing unit (10) transmits on the data line a mode selection bit (RW) having a first value if said transfer cycle with addressing is a write cycle, and a second value, complementary to the first value, if said transfer cycle with addressing is a read cycle.

4. A process in accordance with claim 3, wherein the data line (BDA) is connected to the input of a shift register ($20_0$-$20_m$) of the peripheral unit (12) timed by the clock line (BCL) and of sufficient size to contain the address bits (A3-A0) and the mode selection bit (RW) transmitted in a transfer cycle with addressing, wherein at least one address value is excluded for the transfer addresses transmitted by the main processing unit (10) in the read cycles with addressing, and wherein, when detecting a strobe pulse, the peripheral unit examines the content of said shift register to determine whether the detected strobe pulse is part of a write cycle with addressing, of a read cycle with addressing or of a direct read cycle, a direct read cycle being selected if the shift register contains the excluded address value and a mode selection bit having said second value.

5. A process in accordance with claim 4, wherein the main processing unit (10) holds the clock line (BCL) at the first logic level when not running a transfer cycle, and wherein the main processing unit and the peripheral unit (12) transmit the data, address and mode selection bits in said transfer cycles in such a way that transitions between said bits occur while the clock line is at a second logic level complementary to the first logic level.

6. A process in accordance with claim 5, wherein while the clock line (BCL) is at the first logic level, the peripheral unit (12) examines the data line (BDA) to detect logic level changes which cannot be attributed to a strobe pulse, and to write the excluded address value and a mode selection bit having said second value in the shift register ($20_0$-$20_m$) in response to such detection.

7. A process in accordance with claim 6, wherein the clock line (BCL) and the data line (BDA) are used by the main processing unit (10) to exchange data with other units in accordance with a protocol wherein the data line does not change logic level more than once while the clock line is at the first logic level.

8. A process in accordance with claim 1 or 2, comprising the step of decoding the bits (A3-A0) of the transfer address received by the peripheral unit (12) in a transfer cycle with addressing, in order to determine whether said transfer cycle with addressing is a write cycle or a read cycle.

9. A process in accordance with claim 8 wherein the data line (BDA) is connected to the input of a shift register ($20_1$-$20_m$) of the peripheral unit (12) timed by the clock line (BCL) and of sufficient size to contain the address bits (A3-A0) transmitted in a transfer cycle with addressing, wherein at least one address value is excluded for the transfer addresses transmitted by the main processing unit (10) in the transfer cycles with addressing, and wherein, when detecting a strobe pulse, the peripheral unit examines the content of said shift register to determine whether the detected strobe pulse is part of a transfer cycle with addressing or of a direct transfer cycle, a direct transfer cycle being selected if the shift register contains an excluded address value.

10. A process in accordance with claim 9, wherein the direct transfer cycles comprise direct write cycles and direct read cycles, respectively selected when the shift register ($20_1$-$20_m$) contains first and second excluded address values, which differ from each other only by a bit located in an input location ($20_1$) of the shift register.

11. A process in accordance with claim 10, wherein the main processing unit (10) holds the clock line (BCL) at the first logic level when not running a transfer cycle, and wherein the main processing unit and the peripheral unit (12) transmit the data and transfer address bits in said transfer cycles in such a way that transitions between said bits occur while the clock line is at a second logic level complementary to the first logic level.

12. A process in accordance with claim 11, wherein while the clock line (BCL) is at the first logic level, the peripheral unit (12) examines the data line (BDA) to detect logic level changes which cannot be attributed to a strobe pulse, and to write, in the shift register ($20_1$-$20_m$), in response to such detection, a default address value corresponding to one of the first and second excluded address values.

13. A process in accordance with claim 12, wherein, in a direct transfer cycle of the type selected when the shift register ($20_1$-$20_m$) contains the default address value, the main processing unit (10) transmits the strobe pulse at the beginning of the cycle, and wherein, in a direct transfer cycle of the type selected when the shift register contains the one of the first and second excluded address values which does not correspond to the default address value, the main processing unit (10) transmits the strobe pulse immediately after the transmission, at the beginning of the cycle, of a bit modifying the one located in the input location ($20_1$) of the shift register.

14. A process in accordance with claim 12 or 13, wherein the clock line (BCL) and the data line (BDA) are used by the main processing unit (10) to exchange data with other units in accordance with a protocol wherein the data line does not change logic level more than once while the clock line is at the first logic level.

15. A process in accordance with any one of the preceding claims, wherein the location where the data bits (d1-d0) are read or written in a direct transfer cycle is a fixed location.

16. A process in accordance with any one of claims 1 to 14, wherein the location where the data bits are read or written in a direct transfer cycle is determined from data transmitted by the main processing unit (10) during a previous write cycle

17. A process in accordance with claim 16, wherein the number (p) of data bits transmitted successively in a direct transfer cycle is determined from data transmitted by the main processing unit (10) during a previous write cycle.

18. A process in accordance with any one of the preceding claims, wherein the bus (13) further includes an interrupt line (INT) on which the peripheral unit (12) sends an interrupt request to the main processing unit (10) when it detects an event among a group of specified events, the peripheral unit comprising a status register to contain bits indicating respectively the events of said group which have been detected, and wherein, when it receives a request on the interrupt line, the main processing unit controls the following transfer cycles:

    - a direct read cycle to read a specified portion of the status register; and
    - if the bits contained in said portion of the status register do not indicate an event detection, at least one read cycle with addressing to read the rest of the status register.

19. A process in accordance with any one of the preceding claims, wherein the direct transfer cycles comprise transfer cycles for commands from the main processing unit (10) to the peripheral unit (12).

20. A synchronous serial bus interface for a peripheral unit (12) controlled by a main processing unit (10) by means of a bus (13) including a data line (BDA) and a clock line (BCL), **characterized by**:

    - strobe pulse detection means (24), to detect strobe pulses occurring on the data line of the bus, while the clock line of the bus is at a first logic level;
    - a first shift register ($20_0$-$20_m$ ; $20_1$-$20_m$) timed by the clock line of the bus, having a serial data input connected to the data line;
    - a second shift register ($20_{m+1}20_{m+n}$) having a serial data input connected to the serial data output of the first shift register or to the data line, and timed by the output of an EXCLUSIVE OR gate having an input connected to the clock line of the bus, and another input receiving a binary selection signal (CD);
    - an output switch (40) connected on the one hand to the serial data output of the second shift register and on the other hand to the data line of the bus;
    - transfer cycle identification means (28,29,33 ; 50), in order to analyse the content of the first shift register when a strobe pulse is detected so as to identify each transfer cycle to which a detected strobe pulse belongs;
    - write registers (18) addressable from a write address obtained from the first shift register when a write cycle with addressing has been identified, a write cycle with addressing wherein the binary selection signal is held at 0, the output switch is kept open and the detection of the strobe pulse is followed by the parallel transfer of the content of the second shift register into the write register denoted by the write address;
    - read registers (19) addressable from a read address when a read cycle has been identified, a read cycle wherein the detection of the strobe pulse is followed by the parallel transfer of at least part of the content of the read register denoted by the read address into the second shift register and by the serial transfer of the content of the second shift register to the output switch, a serial transfer during which the binary selection signal is set at 1 and the output switch is closed; and
    - transfer cycle managing means (30) to obtain the read address from the first shift register when a read cycle with addressing has been identified, and to supply a previously specified read address (*a*) when a direct read cycle has been identified.

21. A synchronous serial bus interface in accordance with claim 20, wherein the read address (a) supplied by the read cycle managing means (30) in a direct read cycle is a fixed address.

22. A synchronous serial bus interface in accordance with claim 20, wherein the read address (a) supplied by the read cycle managing means (30) in a direct read cycle is obtained from the content of one of the write registers.

23. A synchronous serial bus interface in accordance with claim 22, wherein the number (*p*) of bits transferred to the output switch (40) in a direct read cycle is obtained from the content of one of the write registers.

**24.** A synchronous serial bus interface in accordance with any one of claims 20 to 23, wherein at least one address value is excluded in the read cycles with addressing, and wherein the transfer cycle identification means (28,29,33) examine the content of the first shift register ($20_0$-$20_m$) when a strobe pulse has been detected so as to identify a direct read cycle if the first shift register contains the excluded address.

**25.** A synchronous serial bus interface in accordance with claim 24, wherein the synchronisation of the transfers by the main processing unit (10) is such that transitions between the transmitted bits occur while the clock line (BCL) is at a second logic level complementary to the first logic level, and that the clock line is held at the first logic level when no transfer cycle is run, and wherein filtering means (27,31) are provided to write the excluded address value in the first shift register ($20_0$-$20_m$) in response to logic level changes which cannot be attributed to a strobe pulse, occurring on the data line (BDA) while the clock line (BCL) is at the first logic level.

**26.** A synchronous serial bus interface in accordance with claim 25, wherein the filtering means (31) are further arranged to write the excluded address value in the first shift register ($20_0$-$20_m$) at the end of each write cycle.

**27.** A synchronous serial bus interface in accordance with any one of claims 20 to 26, wherein the write registers (18) are further addressable from a previously specified write address (*a*) when a direct write cycle has been identified, a direct write cycle wherein the binary selection signal is held at 0, the output switch is kept open and the detection of the strobe pulse is followed by the parallel transfer of the content of the second shift register into the write register denoted by the write address.

FIG.4.

FIG.1.

FIG.6.

FIG.2.

EP 0 938 048 B1

# FIG.3.

EP 0 938 048 B1

FIG.5.

FIG.7.

EP 0 938 048 B1

# FIG.8.

EP 0 938 048 B1

# FIG.9.

BCL

BDA A3 A2 A1 A0 D7 D6 D5 D4 D3 D2 D1 D0

STROBE

HOLD

RR

FM

RD

CD

CC

EORC

CP

EP 0 938 048 B1

FIG.10.

FIG.11.

EP 0 938 048 B1